# EUROPEAN PATENT APPLICATION

(11) **EP 0 730 992 A2**
(43) Date of publication of application: **11.09.1996**
(21) Application number: 95113978.1
(22) Date of filing: 06.09.1995
(51) Int. Cl.: B60N 2/02

(54) **Command system for electrically controlled positioning seats**

(30) Priority: 08.03.1995 IT TO950174
(71) Applicant: BITRON S.p.A., I-10060 Cantalupa (TO) (IT)
(72) Inventor: Lo Re, Renato, I-Rivoli (TO) (IT); Durbano, Battista, I-Torino (IT); Mantellino, Marco, I-Torino (IT)
(74) Representative: Lotti, Giorgio

(57) **Abstract**

A command system is described for an electrically positioned seat, of the type comprising a motor (EM) electrically activated for producing a movement of the seat (SE), manual command means (CM) for controlling the positioning of the seat (SE), a control unit (CU) of said motor (EM) connected to said command means (CM).

According to the invention, safeguard means (SM) are also provided, for realising the stopping of a translational movement of the seat (SE) in an automatic manner.

## Description

The present inventions relates to command system for an electrically positioned seat, of the type indicated in the preamble of the annexed claim 1.

It is known that, above all in the automobile sector, use is becoming more and more frequent of seats equipped with electrical systems for adjusting their position.

Such systems normally comprise manual command means that, by way of an appropriate control unit, allow the command of one or more electric motors able to realise the desired positioning of the seat, within the limits of an established run.

Such desired positioning may regard the seat as a whole or distinct parts of which; in particular the movement may typically regard the forward or backward movement of the whole seat, or its raising, or the rotation of the seat and of the back rest around a fixed point, or the adjustment of only the back rest, for its inclination and tilting.

It may occur, during the passage of such movement or translation, that the seat or back rest meets an obstacle during its run, which prevents the correct positioning of the seat or back rest: such obstacle could for instance be constituted by the body of a passenger of the vehicle, or any other object placed along the sliding guides of the seat itself.

This is obviously the source of drawbacks, as the grave risk exists of causing physical injuries to the passenger (imagine an infant).

A first aim of the present invention is that of overcoming the aforementioned problem, indicating a command system for electrically commanded seats that guarantees the safety of the people present in the vicinity of the seats themselves and that at the same time allows for avoiding damage to its sliding system, in the case of obstacles.

It is also known that various anti-theft devices exist for preventing theft of the vehicle, which provide for such purpose means for detecting and signalling attempts at entering the vehicle from the outside and/or means for preventing the starting of the vehicle itself.

The anti-theft devices of the first type usually suppose that at least one sensor has been installed for detecting eventual entry attempts, at least an electronic control unit, and at least an alarm signaller; the systems of the second type are on the other hand characterised by the presence of appropriate devices that, in following a command signal coming from an appropriate control unit, prevent the primary functions of the vehicle itself, such as starting the engine or the fuel flow to the engine; in both the mentioned systems, the control unit provides for enabling and disabling the anti-theft functions upon receiving an appropriate entry key, generally of the electronic type and usually emitted by way of a remote control.

It is in any case clear that the anti-theft systems of the type known are of a considerably high cost, due both to the number and complexity of the components necessary, and the necessity of the relative installation within the vehicle.

According to another important aspect, therefore, the present invention is based on the acknowledgement of the fact that the function of preventing the theft of a vehicle can be efficiently realised by way of a system of electrically commanded seats.

In this light, therefore, a second aim of the present invention is that of indicating an anti-theft system for vehicles that is both of contained costs and that, in practice, is substantially realised by way of the same control elements the greater part of which are already present in a vehicle equipped with an improved system of electrically movable seats.

The aforementioned aims are reached, according to the present invention, by way of a command system for an electrically positioned seat incorporating the characteristics of the annexed claims.

The characteristics and advantages of the present invention shall result in being clear from the following description, executed with reference to the annexed drawings, supplied purely as an explanatory and non limiting example, wherein:
- figure 1 illustrates under the form of simplified diagrams the run of an output signal of a speed sensor of an electric motor of the type used for the movement of the seats, in three different operational conditions;
- figure 2 illustrates under the form of simplified diagrams the run of an output signal of a sensor of the current absorbed by an electric motor of the type used for the movement of the seats, in three different operational conditions;
- figure 3 illustrates under the form of simplified diagrams the run of the output signals of a sensor of the current absorbed and of a sensor of the supply voltage of an electric motor of the type used for the movement of the seats, in two respective different operational conditions;
- figure 4 represents a simplified block diagram of the command system according to a possible embodiment of the present invention.

In the description of the present invention only a single type of movement of the seat will be taken into consideration, i.e. that corresponding to the backward and forward movement of the seat; it is however clear that the functions assured by the system according to the invention can easily be extended also to other translational runs of the seat or of its components, such as the back rest.

The command system according to the invention comprises an electrically activated motor, of the type in itself known and appropriately realised and arranged for obtaining the desired movement of the seat; the function of said motor is controlled by an appropriate central control unit, or control unit, of the type comprising an appropriately programmed electronic microcontroller; one or more buttons are also naturally provided, that allow for executing a manual command: such command, by way of said central control unit, is transferred to the electric motor for obtaining the desired positioning of the seat.

According to the invention, to the said central control unit appropriate sensor means are also associated, through which the said microcontroller is able to deduce or detect the presence of a foreign body, that hinders the programmed movement of the seat; the microcontroller of the central control unit is with such aims appropriately programmed until, during the moment in which the seat is hindered by a foreign body detected by said sensor means, the automatic stopping and/or inversion of the movement of the seat is carried out.

The method of managing such stopping and inversion function of the passage of the seat naturally varies according to the type of sensor means used.

In particular, according to the invention, two different detection methods of the presence of obstacles can substantially be provided, the first realised by carrying out appropriate measurements concerning the electric motor that realises the movement of the seat, the second realised by detecting the physical presence of the obstacle which hinders or can hinder the correct movement of the seat.

In the following description, the two different approaches, the sensor means and the relative management systems will be separately described.

Regarding the measurements carried out concerning the electric motor, these can be realised in various ways and by way of various types of sensors appropriately interfaced to the microcontroller of the central control unit.

Such means can for instance be constituted by Hall effect sensors, or by magnetostriction sensors, or by optical type sensors; such sensors, of the type in themselves known, are arranged on the motor for detecting its rotation, providing as output trains of square wave impulses proportional to the speed of the motor shaft.

Such sensors, together with appropriate memorising systems, for instance using memories of the RAM or EEPROM type, are able to supply information relative to the position reached by the seat during its run and, naturally, relative to the speed of the seat.

It is therefore clear that the memorisation of the position of the seat instant for instant allows for knowing the end of the run, without having to deduce such from the readings of other sensors, which thus allows for reducing the weight of managing the system.

In a second possible embodiment of the invention, position and speed sensor means can be used.

In this case we are concerned with trimmers or resistive potentiometers, rotary or linear, associated to said electric motor so as to vary their position in function of the rotation of the motor; such sensor means, upon varying respectively their angular or linear position, vary their resistance.

Also in this case, therefore, the reading of their output signal by way of the microcontroller of the central control unit allows for knowing the position of the seat and, monitoring the resistive variation respects the time, speed and acceleration of the seat itself. Such system has the great advantage of having the memory of the seat position without rendering necessary the use of a non volatile memory associated to the microcontroller.

A third possible embodiment provides for the use of an appropriate current sensor, such as for instance a shunt resistance associated to the motor. In this case we are concerned with providing a very low ohmic value resistance (some milliohm or some tens of milliohm) arranged in series to the supply of the motor, so as that, upon the passage of the current, a voltage fall is obtained being proportional to the current that circulates in the motor. Also in this case, as will be clarified in the following of the present description, the microcontroller of the central control unit can easily be programmed for deducing, from the interpretation of the read current value, the presence of any eventual obstacles.

A fourth possible embodiment, in the case of measurements executed on the motor, is that of providing the use of a supply voltage sensor. This can be realised through an appropriate resistive divider, connected in parallel to the motor and able to generate an output voltage corresponding to a fraction (function of the resistive ratio) of the supply voltage of the motor. Such sensor therefore serves in monitoring the voltage of the battery.

Finally, a further embodiment of the invention, concerning the approach based on the measurement of the operative characteristics of the electrically activated motor of the seat, provides for the use of a temperature sensor.

Such device can be constituted by a classical temperature sensor with positive temperature coefficient (PTC) or a negative (NTC) which, appropriately inserted on a resistive divider, is able to supply in output a voltage proportional to the temperature of the motor. The detection of the motor temperature, as explained hereinafter is useful for integrating the information coming from the various types of sensors mentioned above.

The use of said various types of sensor means, that being in itself known has not been described in detail, allows for executing various types of measurements on the motor, with the purpose of the aims of the present invention. Naturally it is possible to use one or more different types of sensor simultaneously, according to the precision and cost required from the seat command system. In such light it therefore results in being clear that, in increasing the number of the sensors used, the amount of information available for the microprocessor of the central control unit is also increased.

Moreover the use of temporary memorisation systems (RAM memories) or permanent (EEPROM), necessary in some cases, increases the reliability of the system as a whole, in that they allow the command system to self-adapt over time to the variations of the parameters in play or allow for a greater versatility of the actual system in the case of changes in the productive phase of some of its parameters (such as the type of seat, its weight, the characteristics of the sliding guides, etc.).

Coming back to the aforementioned sensor means, a first possible way of managing the system according to the invention is based only on reading the speed of the electric motor that realises the movement of the seat; in other words, therefore, the microprocessor of the central control unit uses, with the aims of the invention, only the information relative to the speed of the motor, measuring the rotation period of said motor i.e. evaluating the number of revolutions per second (which means for instance that the physical position of the seat can be obtained by counting the number of revolutions carried out by the motor starting from a position of the end of run).

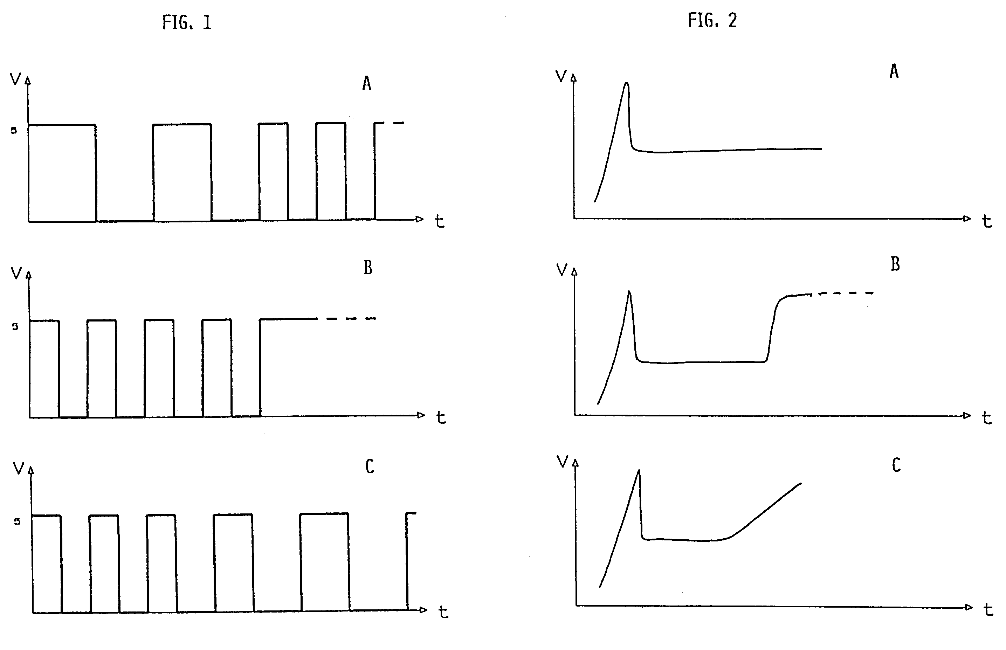

While the motor is moving, during the initial transient, there will be an acceleration of the system that, starting from a zero speed, will reach a state speed: this means a variation of the period of the signal coming from the speed sensor, as graphically represented in part A of figure 1, where on the axis of abscissa the time t is indicated and on the axis of ordinates the voltage value V in volts is indicated.

At the end of the maximum run allowed, the seat will stop against the stops of the relative guides, for which the impulses coming from the speed sensor will suddenly block, as represented in part B of figure 1 (the output can he high or low according to the position in which the seat is blocked).

On the contrary, in the presence of an obstacle that interferes with the normal translation of the seat, the necessary force for producing the movement of the seat itself will increase, with a consequent deceleration of the motor, such deceleration can be translated in a lengthening of the periods of voltage generated by the speed sensor, as represented in part C of figure 1.

From the above, it therefore results in being clear that the management of the variations of the impulses generated by the speed sensor, by way of a central control unit equipped with a microcontroller, allows for the interpretation of the movement of the seat.

The discrimination between acceleration and deceleration of the motor takes place considering the difference between one reference period and the next: if the first is greater than the second this means acceleration, therefore the microcontroller knows that the system is in a starting phase; in the contrary case on the other hand a deceleration is detected.

In this second case, therefore, the microcontroller provides to quantize the difference between the two impulses and to compare said difference with a previously memorised value, or self-learnt during the functioning of the motor at a constant speed: in the case of exceeding said level, the microcontroller arranges for automatically activating the stopping and/or inversion of the sense of movement of the seat, or if preferred the rotational sense of the motor.

In the case of simple measurements of the speed, it is also possible to program the microcontroller to monitor and compare more periods, with the aim of obtaining a greater reliability of the system, making it insensible to disturbances.

Such measuring system of only the motor speed has the advantage that, with appropriate programming of the microcontroller, the necessity of an analog/digital converter is avoided. The use of memory means associated to the microcontroller then allows for memorising the position and speed of the seat.

A second possible type of managing the system according to the invention, that uses the sensor means previously described, is based on reading only the current flowing in the motor. In this case the microcontroller of the central control unit only uses the information relative to the current absorbed by the motor and detected by way of a sensor of the type described above, for instance measuring the voltage fall at the ends of a shunt resistance.

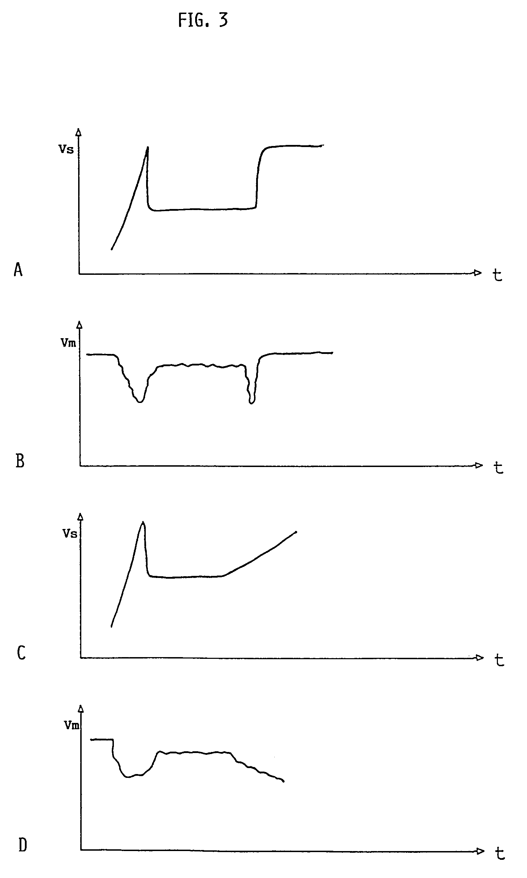

During the initial transient of the motor, the acceleration of the motor brings about a current absorption of the type indicated in part A of figure 2, which then stabilises at a state of a constant value.

At the end of a normal run, the seat will stop against the blocks of the relative sliding guides; therefore the current absorbed by the motor will undergo a sudden increase, as represented in part B of figure 2.

On the contrary, in the presence of an obstacle, as the force exercised on the motor is increased, the current absorbed by the same is also increased, but in a more gradual manner compared to the condition of reaching the normal end of the run, as represented in part C of figure 2.

Therefore, as the current gradient, i.e. the variations of the current over time, is less in the case of obstacles compared to the case of the end of run, the microcontroller is able to distinguish the two different conditions.

The system of detecting obstacles based on measuring the current of the motor has the advantage of being of low costs, in that it does not require appropriate sensors located on the motor.

A third possible way of managing the system according to the invention is based on the reading of both the current and the voltage associated to the motor.

In this case, therefore, the microcontroller uses two different types of information, as before obtained through the sensors of the type previously described.

In particular, the current absorbed by the motor is detected by calculating the voltage fall at the ends of a shunt arranged in series to the motor, while the voltage is obtained with a resistive divider, arranged in parallel to the motor.

The passage of the two voltages in output by the sensor means, in the case of normal functioning, is in this case of the type illustrated in part A of figure 3, for that regarding the voltage at the ends of the shunt (Vs), and of the type illustrated in part B of figure 3 for that regarding the passage of the supply voltage of the motor (Vm); the voltage fall at the ends of the motor during normal functioning, made clear in part B of figure 3, is the consequence of the voltage fall of the dispersed resistances of the system, such as those constituted by the resistance of the supply cables; moreover the entity of such voltage fall at the ends of the motor also depends on the number of utilisers inserted on the system.

As can be understood, in the presence of an obstacle that hinders the correct movement of the seat, the current absorbed by the motor increases, therefore its passage will be become like the type illustrated in part C of figure 3; to the increase of the current absorbed a reduction of the supply voltage will consequently correspond as is shown in part D of figure 3.

It is therefore clear that even in this case the microcontroller, appropriately programmed for the purpose, is able to easily distinguish between the correct functioning condition and that of the presence of unintended obstacles.

Such method, using the measures of both the voltage and the current, has the advantage of not requiring appropriate sensors on the motor. It is also a more accurate method compared to that based on the measuring of only the current, as it allows to distinguish the increase of the current absorbed given by the increase of the stress. In this case a suitable analog/digital converter has to be associated to the microcontroller.

A fourth possible way of managing the system according to the invention is based both on the reading of the motor speed and on the current absorbed by the motor.

The speed can be detected with sensors, of the type as those previously described, integrated on the motor of the seat, giving place in the presence of obstacles to a passage of the type previously shown in part C of figure 1.

Similarly, the measuring of the current through a shunt detects a course of the type represented in part C of figure 2.

It appears clear that also in this case, with appropriate programming, the microcontroller of the central control unit is able to distinguish the condition of correct or incorrect functioning.

Such system is shown to be advantageous in the case in which motors are available with speed sensors already integrated and allows, by way of use of memory means associated to the microcontroller, to memorise the position and/or the speed of the seat. Such system also allows for distinguishing the temperature by way of the current that passes within the motor, which allows to distinguish a stress from a voltage reduction. Also in this case the microcontroller has to be associated to an analog/digital converter.

A fifth possible way of managing the system according to the invention is based on the reading of the information both on the speed and the supply voltage of the electric motor. The speed is detected by way of the means and techniques previously described, as is how the voltage value is detected by way of a voltage divider arranged in parallel to the motor. In this case, in the condition of the presence of obstacles that hinder the normal movement of the seat, the courses represented in part C of figure 1 and in part D of figure 3 will be obtained.

Such system, that requires an A/D converter, is advantageous in the case of speed sensors being integrated in the motor and, with the use of memory means, allows for memorising both the speed and the position of the seat; the voltage reading is also very cheap to realise.

A sixth possible way of managing the system according to the invention is based on the reading of three different types of information, i.e. the speed, voltage and the temperature.

The former two are elaborated in the ways described above; for that regarding the temperature It is possible to use, as already mentioned, a sensor of PCT or NTC type.

The advantages therefore remain of the system based on the speed and voltage detection, the present system (speed-voltage-temperature) allows for distinguishing whether the reduction of motor speed is due to a force or to the voltage reduction caused by an increase in the temperature.

A seventh possible way of managing the system according to the invention is based on the reading of the speed voltage and current. The way in which such types of information is detected is practically the same as that previously described and where, under stress, the courses of part C of figure 1, part D of figure 3 and part C of figure 2 are detected.

Such system allows for easily distinguishing the current variation from that of the voltage and to distinguish the temperture current variation of the motor by way of the current which passes within the same. Also in this case an A/D converter associated to the microcontroller is required.

From the above description it therefore results in being clear how it is possible to deduct the presence of an obstacle by simply equipping the seat command system with appropriate sensor means, able to detect determined operational characteristics of the electric motor which produces the movement.

As previously mentioned, according to the invention, it is also possible to carry out a detection of the physical presence of eventual obstacles located along the course that the seat is commanded to undertake. Also in such a case various types of sensors can be used, some of which will be examined in the following.

A first kind of sensor used is of the ultrasound type.

In such case the system assures that the seat is equipped with, in appropriate points, for instance to the rear of the back rest, seals realised in the form of tubular elements capable of being deformed under compression. To the inside of each seal a band of ultrasounds is sent, by an appropriate generator, in such a way that the seal itself acts as a wave guide, for conveying the band of ultrasounds to a receiver tuned to the transmitted frequency.

In the case of compressing a seal, determined by the pressure of the seat against an obstacle, the shape of the seal will result in being modified, which is translated as a variation of the signal received by said receiver; as a consequence the microprocessor of the central control unit interprets such variation of the signal as the presence of an obstacle hindering the normal movement of the seat.

With the same principle as that described above it is also possible to use a single element within the same tubular seal, able to generate the ultrasound signal and receive the return echo, which will vary according to the pressure exercised on the seal in the case of meeting an obstacle.

A second physical detection method of a obstacle provides for the use of an optical fibre through which a suitable band of light is made to pass. As is so, in this case one or more optical fibres will be arranged in the seat, in the more critical points for detecting obstacles.

In such case a band of light, which is sent to a photodiode, is made to pass through the optical fibre, which is wound so as to create curves that, in the moment of the compression in following the meeting of an obstacle, modify the luminous intensity received by a suitable receiver. In this case, the variations of the luminous intensity will be interpreted as a compression of the optical fibre by an obstacle located along the run of the seat and the microcontroller will be able to intervene commanding in an automatic way the stopping and/or inversion of the motion of the motor.

Another physical detection system of obstacles according to the invention provides for the use of light barriers, i.e. bands of light inserted at an end of a tubular seal, so as that a suitable receiver receives a signal at the other end of the seal. Also in this case the variation of the form of the seal, with the consequent modification to the band of light, will be interpreted as a compression of the actual seal against an obstacle.

In other possible embodiments of the invention the sensor means of the physical presence of an obstacle can be realised by strips, having particular characteristics, arranged in appropriate points of the seat which is to be controlled.

For instance conductive strips can be provided, made up of two conductors held apart by suitable insulating supports which, however, in the moment of compression against an obstacle, allow the two conductors to touch and thus operate a contact. Such contact informs the microcontroller of the necessity to stop and/or invert the movement of the seat.

We are therefore dealing with an ON/OFF type devices, in which the level of compression force necessary for activating the safety system is established in the realisational phase of the strip.

Similarly, resistive type strips can be provided, i.e. impact sensors that supply in output an analogic value proportional to the pressure stressing them. Such strips can be therefore interfaced with the microcontroller of the central control unit, so as to allow for metering electrically the force of the motor.

Another possible embodiment in the case of physically detecting obstacles is that of providing the use of proximity sensors, i.e. capacitive or inductive sensors that, connected to the central control unit, supply in output a signal having a sinusoidal passage at an established frequency.

Upon nearing an obstacle, such sensors produce a variation of the generated frequency or even a block of the output signal: such variation is managed by the microprocessor for starting the eventual automatic stopping or inversion of the movement of the seat.

Therefore in this particular case, the presence of an obstacle can eventually be detected even before the effective collision between the seat and the obstacle.

Naturally it is possible even in this case to simultaneously use one or more types of sensors or one or more detection techniques, according to the precision and cost that is desired for the seat command system.

As previously said, a second aim of the present invention is that of indicating an anti-theft system for automobiles, based on the use of a command system for electrically positioned seats.

With such aim, a very important aspect of the system previously described in fact regards its possibility of being used as an anti-theft device.

In such light, according to the invention it is possible to program the microcontroller of the central control unit of the system so as to make the seat take on, in following an appropriate command, for example the position in which the body of the seat itself is moved completely forward, in vicinity of the dashboard of the vehicle and with the back rest being very near to the steering wheel. In this way, in fact, with the space between the seat and the dashboard being minimum, both the command pedals of the vehicle (brakes, clutch, accelerator), and the steering wheel become practically inaccessible, making manoeuvrability of the vehicle impossible. It is thus clear that a suitable programming of the microcontroller of the control unit of the system according to the invention allows for obtaining in a simple and cheap way the security function against theft of the vehicle.

Such function finds an application being particularly simple in the case of the abovementioned systems equipped with the possibility of memorising the position of the seat. In fact, in such case, it would be sufficient to memorise, in the permanent memory means associated to the microcontroller, the most suitable position for the seat for obtaining the anti-theft function. In such a case an appropriate command device is associated to the central control unit, for allowing the activation of the anti-theft function; such device can for example be constituted by a suitable receiver of signals coming from a remote control, associated to the central control unit, through which the user can command the anti-theft method of the system.

Therefore, when the user activates such function by way of the remote control, the microcontroller of the central control unit will provide, through the electric motor, to move the driver seat towards the dashboard of the vehicle; upon reaching the memorised position, in which the manoeuvrability of the vehicle is in fact prevented, the seat will stop in an automatic way, without the necessity of the intervention of the manual command means.

When the user wishes to disable the anti-theft function, it will be sufficient to press once again the appropriate key of the remote control; in such case the microcontroller of the central control unit will command the motor so as to obtain the reversal of the seat until reaching the initial position, that the microcontroller had previously provided to memorise upon activation of the anti-theft function.

It is finally to be mentioned that, in its preferred version, the use of the system according to the invention with the anti-theft function supposes the use of both memory means of the position of the seat and sensor means for detecting the presence of eventual obstacles. The first aspect is in fact bound to the possibility of realising the movement of the seat and its automatic stopping upon reaching the position as close as possible to the dashboard or steering wheel, without touching it, and to the realise the return of the seat to its initial position; the second aspect, i.e. the presence of obstacle sensor means, is on the other hand made necessary due to safety measures, with the aim of guaranteeing the safety of the passengers of the vehicle in the case in which the anti-theft device is inadvertently activated.

It is finally mentioned that, in such case of use of the system as an anti-theft device, the control unit would be programmed for disabling the obstacle sensor means once the seat has reached the position near the dashboard or steering wheel; i.e. with the aim to avoid that an eventual thief can cause the reverse movement of the seat, by way of the system itself, simulating an impact of the seat against an obstacle.

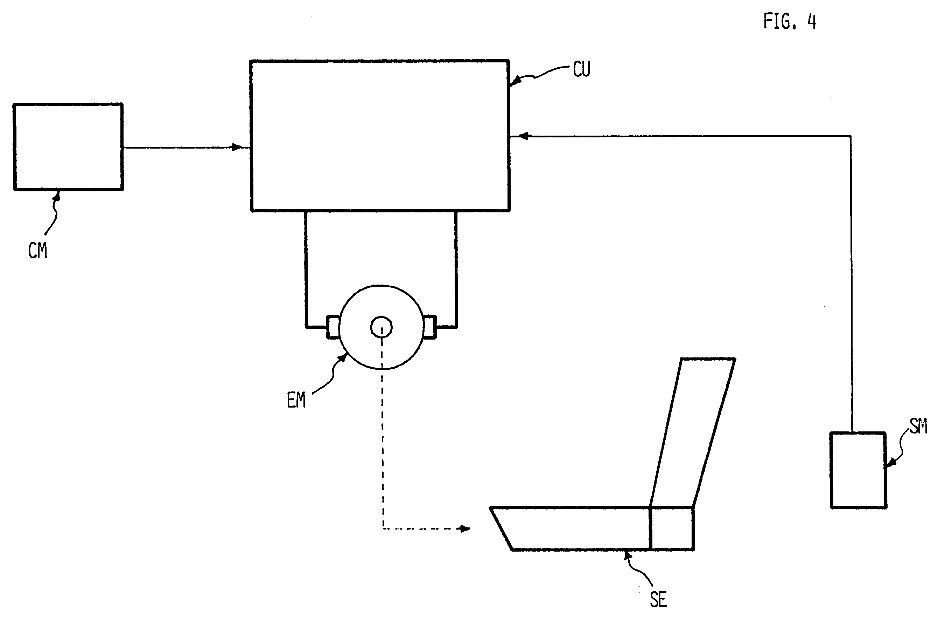

In figure 4 there is represented, for ....purposes, a simplified block diagram of the command system according to a possible embodiment of the present invention.

In said figure 4, with SE a seat is indicated and with EM an electric motor is , of the type in itself known and appropriately realised and arranged so as to produce the desired movement of the seat SE; with CU a control unit is indicated of the motor EM, of the type comprising an electronic microcontroller, appropriately programmed as described above; with CM manual command means are indicated (such as one or more buttons) being connected to the cited unit CU, for controlling the desired positioning of the seat SE; with SM are finally indicated the safeguard means, being realised through the above described sensor means and/or position memorising means, which in accordance to the present invention allow for realising in an automatic way the stopping of a translational movement of the seat SE.

From the given description the characteristics and advantages of the present invention result in being clear.

In particular according to the invention, the command system for an electrically positioned seat is enriched with appropriate sensor and/or position memorising means, that allow for detecting the presence of eventual obstacles and to carry out, by way of a microcontroller, programmed for the purpose, the appropriate corrective actions, represented in the most simple case by the stopping and by the inversion of the motion originally transmitted to the seat by way of a manual command.

Such system can also be efficiently used for realising an anti-theft function, consisting in commanding the actioning motor of the seat and/or its back rest so as to obtain a positioning of the same which in fact makes the manoeuvrability of the vehicle impossible; as said, said anti-theft function can be realised using the same elements constituting the security system for the safety of the passengers.

It is finally said that, according to the invention, and in particular for the more classic movements of an electric seat, i.e. the forward and backward movement, the detection of obstacles is allowed in both the directions, by way of appropriate measurements of the motor and/or by way of the availability of particular sensors on the front or rear side of the seat itself.

It is clear that numerous variants are possible by the skilled man to the system described, without departing from the novelty principle inherent in the inventive idea.

One such variant could be the possibility of providing sensors of a type being different from those described above by way of example, such as sensors of the active or passive infra-red rays type, or piezoelectric seals or with gas or liquid contained within connected to appropriate pressure sensors.

It is finally clear that the present invention, described herein with reference to the automobile sector, is apt at applications also in other sectors (e.g. aeroplanes, professional electric armchairs, etc.), in which there is the need to protect the safety of the people present in the vicinity of a seat moved by way of a motor.

## Claims

1. Command system for an electrically positioned seat, of the type comprising a motor (EM) electrically activated for producing a movement of the seat (SE), manual command means (CM) for controlling the positioning of the seat (SE), a control unit (CU) of said motor (EM) connected to said command means (CM), characterised in that safeguard means (SM) are provided, for realising the stopping of a translational movement of the seat (SE) in an automatic manner.

2. System, according to claim 1, characterised in that said automatic stopping is provided for protecting the safety of people present in the vicinity of the seat (SE).

3. System, according to claim 1, characterised in that said automatic stopping is provided for obtaining a position of the seat (SE) that makes the manoeuvrability of a vehicle within which the seat (SE) is installed impossible when the system is used in an anti-theft mode.

4. System, according to claims 1 and 2, characterised in that said safeguard means comprise sensor means (SM), connected to said control unit (CU), provided for detecting the presence of an eventual obstacle which interferes with the correct movement of the seat (SE) during the run of its translational movement and that, in the case of detecting an obstacle by way of said sensor means (SM), said control unit (CU) provides for automatically stopping and/or inverting the translational sense of the seat (SE).

5. System, according to claims 1 and 3, characterised in that said safeguard means (SM) comprise memory means, for memorising various possible positions of the seat.

6. System, according to claim 5, characterised in that a first of said positions corresponds to that in which the seat (SE) is found positioned in a manner to make manoeuvrability of the vehicle impossible, in said position the seat (SE) being found in particular to be moved forward, close to the dashboard of the vehicle and/or with the back rest in proximity to the steering wheel.

7. System, according to claims 3 and 5, characterised in that upon activation of said anti-theft mode, the motor (EM) produces a first translation of the seat (SE) which is automatically interrupted upon reaching said first position memorised in said memory means.

8. System according to the previous claim, characterised in that upon disabling of said anti-theft mode, the motor (EM) produces a second translation of the seat (SE), in the contrary sense of the first translation.

9. System, according to claim 4, characterised in that the presence of said obstacle is deduced by said control unit (CU) interpreting the signals coming from said sensor means.

10. System, according to claim 4, characterised in that the presence of said obstacle is physically deduced by said sensor means (ultrasound sensors, optical fibre sensor, seal deformable upon compression, conductive strip sensor, impact sensor, proximity sensor, infra-red rays sensor, piezoelectric seal sensor, seal with fluid contained within).

11. System, according to claim 9, characterised in that said sensor means are provided for measuring operational characteristics (rotary speed and/or current absorbed and/or temperature and/or voltage at the ends of said motor) of the electric motor (EM) that produces the movement of the seat (SE) and from these to detect the impact taken place with the obstacle.

12. System, according to claim 10, characterised in that said sensor means are provided for detecting the physical collision of the seat (SE), during the course of its translational movement, with said obstacle.

13. System, according to at least one of the previous claims, characterised in that said control unit (CU) comprises an electronic microcontroller, which is, when required, associated to an analog/digital converter for the conversion of the data coming from said sensor means.

14. System, according to the previous claim, characterised in that memory means are provided (RAM, EEPROM) associated to said microcontroller, for the memorisation of operational parameters of the system.

15. System, according to the previous claim, characterised in that in said memory means the physical positioning of the seat (SE) is memorised instant for instant, respects the run that it can accomplish.

16. System, according to at least one of the previous claims, characterised in that said control unit (CU) is able to distinguish the end of run position of the seat (SE) respect the presence of an obstacle.

17. System, according to at least one of the previous claims, characterised in that the physical positioning of the seat is obtained counting the number of revolutions performed by the motor (SE) starting from an end of run position.
